Europäisches Patentamt

European Patent Office

Office européen des brevets

(11) Veröffentlichungsnummer: **0 179 197**
**A2**

## (12) EUROPÄISCHE PATENTANMELDUNG

(21) Anmeldenummer: 85107401.3

(22) Anmeldetag: 15.06.85

(51) Int. Cl.⁴: **G 01 C 21/16**

(30) Priorität: 23.10.84 DE 3438719

(43) Veröffentlichungstag der Anmeldung:
30.04.86 Patentblatt 86/18

(84) Benannte Vertragsstaaten:
DE FR GB SE

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Krogmann, Uwe**
**Zur Äsche 24**
**D-7770 Überlingen-Nussdorf(DE)**

(72) Erfinder: **Boch, Wolfgang**
**Brühlstrasse 36**
**D-7777 Salem-Minnenhausen(DE)**

(74) Vertreter: **Weisse, Jürgen, Dipl.-Phys. et al,**
**Patentanwälte Dipl.-Phys. Jürgen Weisse Dipl.-Chem. Dr.**
**Rudolf Wolgast Bökenbusch 41 Postfach 11 03 86**
**D-5620 Velbert 11 Langenberg(DE)**

(54) Anordnung zur Bestimmung der zeitlich veränderlichen Lage und von Fehlern eines Tochternavigationssystems relativ zu einem Mutternavigationssystem.

(57) Es ist ein Mutternavigationssystem mit Sensoren, z.B. Kreiseln, hoher Güte und ein Tochternavigationssystem mit billigeren Sensoren geringerer Güte vorgesehen. Es soll die Lage des Tochternavigationssystems relativ zu dem Mutternavigationssystems ermittelt werden. Gleichzeitig sollen Sensorfehlerparameter des Tochternavigationssystems bestimmt werden. Zu diesem Zweck werden durch integrierende Mittel (40) Schätzwerte $(\hat{x}_1, \hat{x}_2, \hat{x}_3)$ von Ausricht- und Sensorfehlern erzeugt. Die Schätzwerte der Fehler werden durch Transformationsmittel (44) in Schätzwerte der von Sensoren gemessenen Meßgrößen $(z, u)$ transformiert, und es werden die Differenzen der Meßgrößen und ihrer Schätzwerte gebildet. Diese Differenzen sind als Eingangsgrößen auf die integrierenden Mittel (40) aufgeschaltet.

EP 0 179 197 A2

Patentanmeldung

Bodenseewerk Gerätetechnik GmbH,
D-7770 Überlingen/Bodensee

Anordnung zur Bestimmung der zeitlich veränderlichen Lage und von Fehlern eines Tochternavigationssystems relativ zu einem Mutternavigationssystem

Die Erfindung betrifft eine Anordnung zur Bestimmung der Lage und von Fehlern eines Tochternavigationssystems relativ zu einem Mutternavigationssystem, die jedes Trägheitssensoren aufweisen.

Insbesondere bezieht sich die Erfindung auf Trägheitsnavigationssysteme. Trägheitsnavigationssysteme bestimmen die Position eines Fahrzeugs oder Flugzeugs im Raum durch zweimalige zeitliche Integration der gemessenen Beschleunigungswerte. Sie enthalten Beschleunigungsmesser und zusätzlich Drehgeschwindigkeitssensoren, durch welche die Lage des Trägheitsnavigationssystems im Raum und damit die Richtungen der gemessenen Beschleunigungswerte bestimmt werden. Es gibt Fälle, in denen ein Mutternavigationssystem und ein Tochternavigationssystem vorgesehen sind, die sich gegeneinander bewegen können, wobei aber deren gegenseitige Bewegung bestimmt werden muß.

Ein Beispiel hierfür sind Flugzeuge, bei denen mehrere Trägheitsnavigationssysteme redundant an voneinander entfernten, miteinander flexibel verbundenen Stellen des Flugzeugs angebracht sind. Durch Lageänderungen des Flugzeugs und durch Verwindungen der Flugzeugzelle können jedoch die Sensoren der beiden Trägheitsnavigationssysteme unterschiedliche Signale liefern. Es ist wichtig, die relative Lage der beiden Trägheitsnavigationssysteme zueinander laufend zu erfassen.

Eine weitere Anwendung ist der Vergleich der Meßwerte eines in einem Flugzeug vorgesehenen Trägheitsnavigationssystems als Mutter-Trägheitsnavigationssystem mit einem Tochter-Trägheitsnavigationssystem, das in einem an dem Flugzeug angebrachten Flugkörper vorgesehen ist. Im Flugzeug selbst ist als Mutter-Trägheitsnavigationssystem üblicherweise ein Trägheitsnavigationssystem mit Sensoren hoher Güte, also beispielsweise sehr geringer Kreiseldrift, vorgesehen. Für Flugkörper wird üblicherweise aus Kostengründen ein Trägheitsnavigationssystem wesentlich geringerer Güte verwendet.

Es ist erforderlich, vor dem Einsatz das Tochter-Trägheitsnavigationssystem in bezug auf das Muttersystem auszurichten, dessen Lage im erdfesten Navigationsreferenzsystem jederzeit bekannt ist.

Der Erfindung liegt die Aufgabe zugrunde, die zeitlich veränderliche Orientierung eines Tochter-Trägheitsnavigationssystems im Vergleich zu einem Mutter-Trägheitsnavigationssystem ausgehend von einem unbekannten Anfangszustand kontinuierlich zu bestimmen. Weiterhin werden gleichzeitig Sensorfehlerparameter des Tochtersystems bestimmt.

Erfindungsgemäß wird diese Aufgabe gelöst durch

(a)   integrierende Mittel zur Erzeugung von Schätzwerten der Fehler,

(b)   Mittel zur Eingabe von Meßgrößen, die von den
      Trägheitssensoren gemessen sind,

(c)   Transformationsmittel zur Transformation von
      Schätzwerten der Fehler in Schätzwerte der besagten Meßgrößen,

(d)   Mittel zur Bildung der Differenzen zwischen
      den eingegebenen Meßgrößen und den Schätzwerten dieser Meßgrößen und

(e)   Mittel zum Aufschalten der besagten Differenzen auf die besagten integrierenden Mittel.

In vielen Fällen, beispielsweise bei der vorstehend erwähnten Flugkörperanwendung, weist das Mutter-Trägheitsnavigationssystem Sensoren wesentlich höherer Güte auf als das Tochter-Trägheitsnavigationssystem. Das Mutter-Trägheitsnavigationssystem ist vor dem Einsatz gegenüber Nord und der Horizontalen ausgerichtet. In diesem Falle wird das Tochter-Trägheitsnavigationssystem zunächst nach dem Mutter-Trägheitsnavigationssystem unter Berücksichtigung der gegenseitigen Montage dieser beiden Systeme initialisiert. Davon ausgehend wird laufend die sich dynamisch ändernde gegenseitige Lage beider Systeme ermittelt, wobei Initialisierungsfehler abgebaut werden. Weiterhin können die Schätzer- und Reglermittel ein Fehlermodell des Tochter-Trägheitsnavigationssystems nachbilden und Schätzwerte für die Sensorfehler des Tochter-Trägheitsnavigationssystems liefern.

Ausführungsbeispiele der Erfindung sind nachstehend unter Bezugnahme auf die zugehörigen Zeichnungen näher erläutert:

Fig. 1   ist eine schematische Darstellung und zeigt das Prinzip einer Anordnung zur gegenseitigen Lagebestimmung von Mutter- und Tochternavigationssystem.

Fig. 2   veranschaulicht schematisch die verschiedenen hier zu berücksichtigenden Koordinatensysteme.

Fig. 3   ist eine perspektivische Darstellung und veranschaulicht die Lagewinkel zwischen den beiden Koordinatensystemen, die dem Mutter (M)- und dem Tochternavigationssystem (S) zugeordnet sind.

Fig. 4   veranschaulicht die Kopplung der beiden Systeme für einen Beschleunigungsvergleich.

Fig. 5   ist ein Blockdiagramm der Signalverarbeitung.

Fig. 6   ist eine Darstellung der Signalverarbeitung ähnlich Fig. 1 und zeigt die Detailstruktur des optimalen Schätzers.

Fig. 7   zeigt bei zwei quasi starr miteinander gekoppelten Navigationssystemen die Darstellung der Drehgeschwindigkeitsvektoren in den zugehörigen Koordinatensystemen.

Fig. 8 zeigt ein Blockdiagramm der Signalverarbeitung, Ausrichtung und Kalibrierung für den Fall, daß Mutter- und Tochternavigationssystem eine bis auf kleine Vibrationen feste aber zunächst unbekannte Lage zueinander haben.

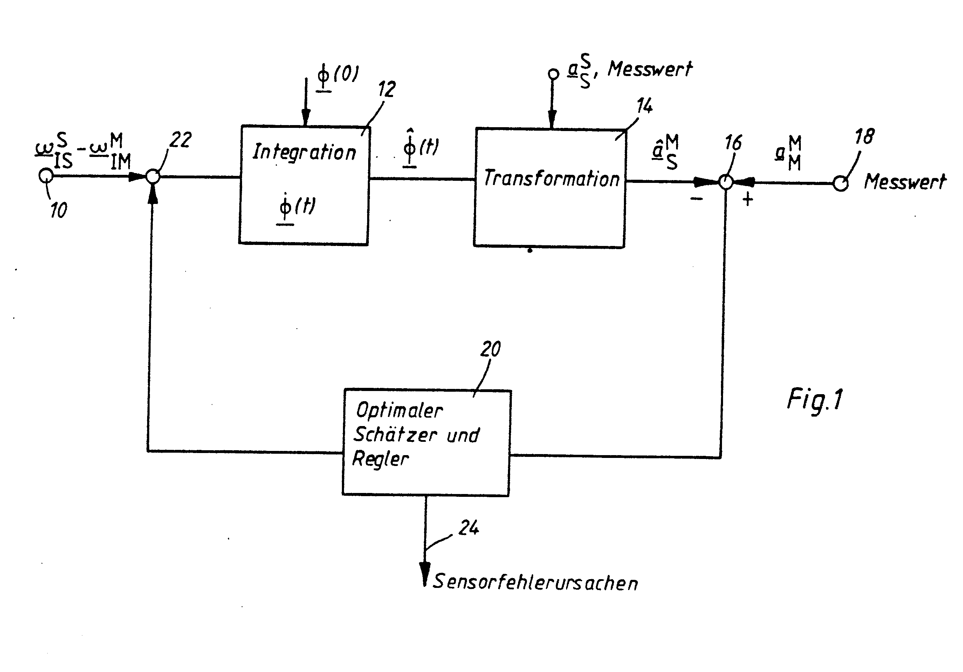

Mutter- und Tochternavigationssystem, z.B. Trägheitsnavigationssysteme, enthalten (in Fig.1 nicht dargestellte) Drehgeschwindigkeitssensoren und (ebenfalls nicht dargestellte) Beschleunigungsmesser. Die von den Drehgeschwindigkeitssensoren gelieferten Drehgeschwindigkeitssignale sind zu Vektoren $\underline{\omega}^M_{IM}$ beziehungsweise $\underline{\omega}^S_{IS}$ zusammengefaßt. Es wird in Fig.1 an einem Eingang 10 die Differenz der Drehgeschwindigkeitssignale entsprechender Drehgeschwindigkeitssensoren von Mutter- und Tochternavigationssystem gebildet. Diese Differenzen werden durch integrierende Mittel 12 zur Bildung von mitgekoppelten Lagewinkeln $\varphi$ , $\vartheta$ , $\psi$ zwischen Mutter- und Tochternavigationssystem zeitlich integriert, wobei Anfangswerte der Lagewinkel, die in einem Vektor $\underline{\Phi}$ (0) zusammengefaßt sind, angenommen werden. Die integrierenden Mittel 12 liefern die Lagewinkel $\varphi$ , $\vartheta$ , $\psi$ , die zu einem Vektor $\hat{\underline{\Phi}}$ (t) zusammengefaßt sind.

Die von den integrierenden Mitteln gelieferten Lagewinkel stellen nur Schätzwerte dar, die einen Vektor $\hat{\underline{\Phi}}$ (t) bilden, da die Anfangswerte der Lagewinkel nicht genau bekannt sind und insbesondere das Tochternavigationssystem mit nicht vernachlässigbaren Sensorfehlern behaftet ist. Die Sensorfehler des Mutternavigationssystems können demgegenüber oft vernachlässigt werden. Die geschätzten, mitgekoppelten Lagewinkel (Vektor $\hat{\underline{\Phi}}$ (t)) zwischen Mutter- und Tochternavigationssystem sind auf Transformationsmittel 14 aufgeschaltet zusammen mit den Beschleunigungssignalen der Beschleunigungsmesser des Tochternavigationssystems, die zu einem Vektor $\underline{a}_S^S$ zusammengefaßt sind. Die Transformationsmittel 14 transformieren die im Koordinatensystem des Tochter-Trägheits-navigationssystems gemessenen Beschleunigungs-signale $\underline{a}_S^S$ als transformierte Beschleunigungssig-nale $\hat{\underline{a}}_S^M$ in das Koordinatensystem des Mutternavigationssystems. Es sind Mittel 16 zur Bildung der Differenz der transformierten Beschleunigungssig-nale und der gemessenen Beschleunigungssignale $\underline{a}_M^M$ des Mutternavigationssystems vorgesehen. Die letzteren Beschleunigungssignale liegen an einem Eingang 18 an. Die Differenzen der Beschleunigungssignale sind auf Schätzer- und Reglermittel 20 aufgeschaltet, welche Korrektursignale liefern, die in einem Summierpunkt 22 am Eingang der integrierenden Mittel 12 den Differenzen der Drehgeschwindigkeitssignale überlagert sind. Die Schätzer- und Reglermittel bilden außerdem ein Fehlermodell des Tochternavigationssystems nach und liefern an einem Ausgang 24 Schätzwerte für die Sensorfehler des Tochternavigationssystems. Diese Sensorfehler können dann im Betrieb des Tochternavigationssystems bei der Navigation berücksichtigt werden.

Der Grundgedanke der beschriebenen Anordnung ist dabei folgender:

Wenn die Integrationsmittel 12 exakt die Lagewinkel $\varphi$ , $\vartheta$ , $\psi$ zwischen Mutter- und Tochternavigations-

system liefern würden, die Drehgeschwindigkeitssensoren des Tochternavigationssystems also keine Fehler aufwiesen und die Anfangswerte $\underline{\Phi}$ (0) der Lagewinkel richtig eingegeben wären, und wenn auch die Beschleunigungsmesser des Tochternavigationssystems fehlerfreie Beschleunigungsmeßwerte $\underline{a}_S^S$ liefern würden, dann müßte der durch die Transformation erhaltene Schätzwert $\hat{\underline{a}}_S^M$ des Beschleunigungsvektors, der sich aus der Transformation des im Tochternavigationssystem gemessenen Beschleunigungsvektors ergibt, exakt gleich dem im Mutternavigationssystem gemessenen Beschleunigungsvektor $\underline{a}_M^M$ sein. Das auf die Schätzer- und Reglermittel gegebene Differenzsignal wäre null. Tatsächlich sind diese idealen Verhältnisse nicht gegeben: Die Drehgeschwindigkeitssensoren des Tochternavigationssystems und die Beschleunigungsmesser des Tochternavigationssystems sind mit Fehlern behaftet. Es wird angenommen, daß demgegenüber die Fehler des Mutternavigationssystems vernachlässigbar sind. Weiterhin sind die Anfangswerte der Lagewinkel nicht bekannt oder jedenfalls mit Fehlern behaftet. Dementsprechend tritt an den differenzbildenden Mitteln 16 ein Differenzsignal auf. Die Schätzer- und Reglermittel liefern dann Korrektursignale, welche schließlich das Differenzsignal an den differenzbildenden Mitteln 16 zum Verschwinden bringen. Im Gleichgewichtszustand liefert der Ausgang der integrierenden Mittel 12 mit guter Näherung die momentanen Lagewinkel zwischen Mutternavigationssystem und Tochternavigationssystem, so daß mit der immer bekannten Lage des Muttersystems in bezug auf das erdfeste Referenzsystem auch laufend die Lage des Tochtersystems zu diesem Referenzsystem bekannt ist. Die Schätzer- und Reglermittel liefern Schätzwerte für die Sensorfehler, die in das Tochternavigationssystem eingegeben und bei der Navigation berücksichtigt werden.

Der Aufbau und die Wirkungsweise der in Fig.1 dargestellten Anordnung ist nachstehend im einzelnen beschrieben.

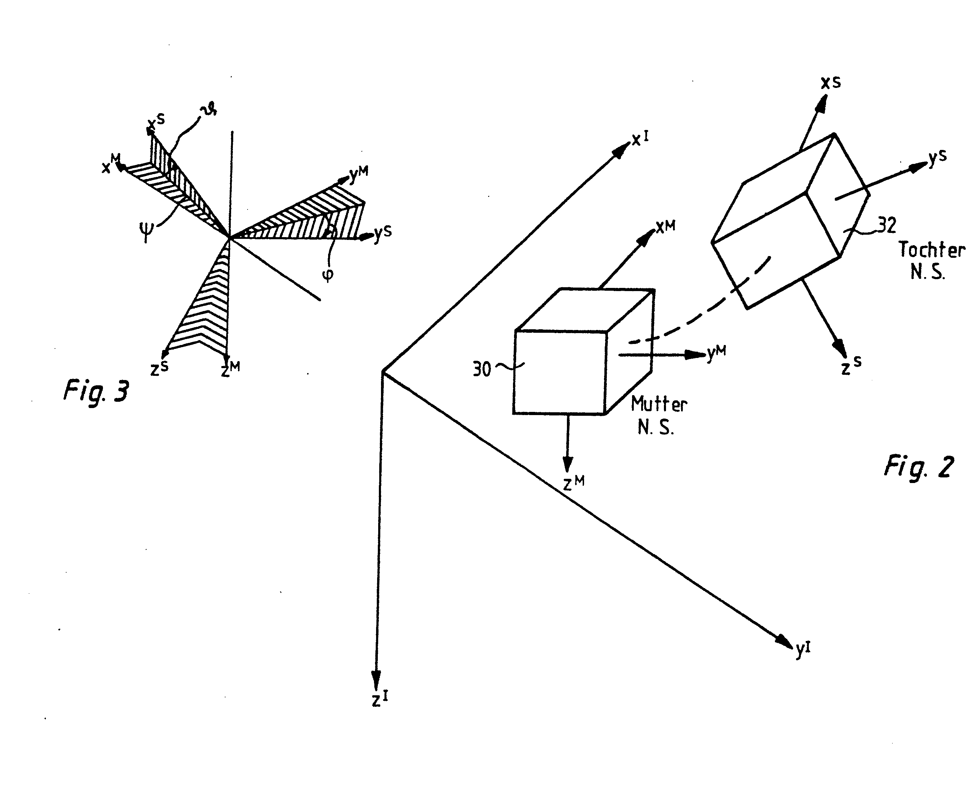

In Fig.2 ist das Mutternavigationssystem mit 30 bezeichnet. Das Tochternavigationssystem 32 ist demgegenüber begrenzt beweglich. Das Mutternavigationssystem 30 definiert ein Koordinatensystem $x^M$, $y^M$, $z^M$. Das Tochternavigationssystem 32 definiert ein Koordinatensystem $x^S$, $y^S$, $z^S$. Ein inertiales Koordinatensystem ist durch Koordinatenachsen $x^I$, $y^I$ und $z^I$ festgelegt.

Wie aus Fig. 3 ersichtlich ist, kann die gegenseitige Lage der beiden Koordinatensysteme $x^M$, $y^M$, $z^M$ und $x^S$, $y^S$, $z^S$ durch Lagewinkel $\varphi$, $\vartheta$, $\psi$ definiert werden. Die Transformationsparameter für eine Transformation aus dem S in das M Kordinatensystem bilden eine Transformationsmatrix

$$(1) \quad C_S^M = [C_{ij}] = \begin{bmatrix} c\vartheta c\psi & -s\psi c\varphi + s\varphi s\vartheta c\psi & s\psi s\varphi + c\varphi s\vartheta c\psi \\ c\vartheta s\psi & c\varphi c\psi + s\varphi s\vartheta s\psi & -s\varphi c\psi + c\varphi s\vartheta s\psi \\ -s\vartheta & s\varphi c\vartheta & c\varphi c\vartheta \end{bmatrix}$$

wobei sin mit "s" und cos mit "c" abgekürzt ist.

Werden für kleine Winkel $\varphi$, $\vartheta$, $\psi$ die Lagewinkel in einem Winkelvektor $\underline{\Phi} = [\varphi ; \vartheta , \psi]$ zusammengefaßt, so gilt für die Zeitableitung dieses Winkelvektors

$$(2) \qquad \dot{\underline{\phi}} = E(\underline{\phi}) \cdot \underline{\omega}_{MS}^S ,$$

Darin ist $\underline{\omega}_{MS}^S$ der im Koordinatensystem des Tochternavigationssystems angegebene Vektor der relativen Drehgeschwindigkeit zwischen Mutter- und Tochternavigationssystem 30 bzw. 32, mit

$$(3) \qquad E(\underline{\phi}) = \begin{bmatrix} 1 & 0 & \vartheta \\ 0 & 1 & -\varphi \\ 0 & \varphi & 1 \end{bmatrix} = [I + M(\underline{\phi})] .$$

Damit kann die Lagedynamik zwischen den beiden Koordinatensystemen $x^M$, $y^M$, $z^M$ und $x^S$, $y^S$, $z^S$ als Funktion der in jedem dieser Systeme auftretenden Drehgeschwindigkeiten gegenüber dem inertialen Raum wie folgt beschrieben werden

$$(4) \qquad \dot{\underline{\phi}} = \begin{bmatrix} 0 & \omega_Z^S & -\omega_Y^M \\ -\omega_Z^S & 0 & \omega_X^M \\ \omega_Y^S & -\omega_X^M & 0 \end{bmatrix} \underline{\phi} + \begin{bmatrix} \omega_X^S - \omega_X^M \\ \omega_Y^S - \omega_Y^M \\ \omega_Z^S - \omega_Z^M \end{bmatrix}$$

In der Form der Gleichungen (3) und (4) wird das "Reale-Welt-Verhalten" der gegenseitigen Lage der beiden Koordinatensysteme beschrieben, wobei in diese Gleichungen die real auftretenden Drehgeschwindigkeiten $\underline{\omega}_{IS}^S$ und $\underline{\omega}_{IM}^M$ eingehen. Dabei ist $\underline{\omega}_{IS}^S = \begin{bmatrix} \omega_x^S & \omega_y^S & \omega_z^S \end{bmatrix}^T$ die Drehgeschwindigkeit des Tochtersystems gegenüber dem inertialen Raum und

$$\underline{\omega}_{IM}^{M} = \begin{bmatrix} \omega_x^M & \omega_y^M & \omega_z^M \end{bmatrix}^T$$

die des Muttersystems gegenüber dem inertialen Raum. In einem Kalmanfilter zur Zustandsschätzung muß diese "Reale Welt" nachgebildet werden. Anstelle der physikalisch real auftretenden Drehgeschwindigkeiten werden dabei deren Meßgrößen eingesetzt. Diese Meßgrößen sind jeweils durch einen Querstrich (―) über dem betreffenden Symbol gekennzeichnet.

Es war angenommen worden, daß das Mutternavigationssystem wesentlich genauer ist als das Tochternavigationssystem. Es kann dann für das Mutternavigationssystem 30 angenommen werden, daß die Meßgröße der Drehgeschwindigkeit $\overline{\underline{\omega}}_{IM}^{M}$ gleich der realen Drehgeschwindigkeit $\underline{\omega}_{IM}^{M}$ ist und keine Meßfehler auftreten. Für das Tochternavigationssystem 32 wird angenommen, daß sich die gemessene Drehgeschwindigkkeit $\overline{\underline{\omega}}_{IS}^{S}$ aus der realen Drehgeschwindigkeit $\underline{\omega}_{IS}^{S}$ sowie einem Nullpunktsfehler (Bias), einem Skalenfaktorfehler und einem Rauschanteil zusammensetzt.

Werden Biasdriften $\underline{B} = \begin{bmatrix} B_x & B_y & B_z \end{bmatrix}^T$ und Skalenfaktorfehler $\underline{DSF} = \begin{bmatrix} DSF_x & DSF_y & DSF_z \end{bmatrix}^T$ als zufällig aber konstant angesetzt, so gilt für das "Reale-Welt-Modell" zur Zustandsschätzung:

$$(5) \quad \begin{bmatrix} \dot{\varphi} \\ \dot{\vartheta} \\ \dot{\psi} \\ \dot{B}_X \\ \dot{B}_Y \\ \dot{B}_Z \\ \dot{DSF}_X \\ \dot{DSF}_Y \\ \dot{DSF}_Z \end{bmatrix} = \begin{bmatrix} 0 & \overline{\omega}_Z^S - \omega_Y^M & -1 & 0 & 0 & -\overline{\omega}_X^S & 0 & 0 \\ -\overline{\omega}_Z^S & 0 & \omega_X^M & 0 & -1 & 0 & 0 & -\overline{\omega}_Y^S & 0 \\ \overline{\omega}_Y^S - \omega_X^M & 0 & 0 & -1 & 0 & 0 & -\overline{\omega}_Z^S \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{bmatrix} \cdot \begin{bmatrix} \varphi \\ \vartheta \\ \psi \\ B_X \\ B_Y \\ B_Z \\ DSF_X \\ DSF_Y \\ DSF_Z \end{bmatrix} + \begin{bmatrix} \overline{\omega}_X^S - \omega_X^M \\ \overline{\omega}_Y^S - \omega_Y^M \\ \overline{\omega}_Z^S - \omega_Z^M \\ 0 \\ 0 \\ 0 \\ 0 \\ 0 \\ 0 \end{bmatrix} + \begin{bmatrix} n_X \\ n_Y \\ n_Z \\ 0 \\ 0 \\ 0 \\ 0 \\ 0 \\ 0 \end{bmatrix}$$

Darin sind $n_x$ , $n_y$ , $n_z$ die Rauschanteile der Drift.

Das ist eine Gleichung von der Form

$$(5a) \quad \underline{\dot{x}} = F \cdot \underline{x} + \underline{u} + \underline{w} \, .$$

Die Zustandsgleichung kann in einer vereinfachten Form geschrieben werden, wenn man einzelne Gruppen von Vektorelementen zu Teilvektoren zusammengefaßt. Die Elemente des Zustandsvektors $\underline{x}$ können gruppenweise zusammengefaßt werden zu

$$(6) \quad \underline{X}_1 = \begin{bmatrix} \varphi \\ \vartheta \\ \psi \end{bmatrix} \quad , \quad \underline{X}_2 = \begin{bmatrix} B_X \\ B_Y \\ B_Z \end{bmatrix} \quad , \quad \underline{X}_3 = \begin{bmatrix} DSF_X \\ DSF_Y \\ DSF_Z \end{bmatrix}$$

Es können weiterhin folgende Teilvektoren definiert werden:

$$(7) \quad \underline{u}_1 = \begin{bmatrix} \bar{\omega}_X^S - \omega_X^M \\ \bar{\omega}_Y^S - \omega_Y^M \\ \bar{\omega}_Z^S - \omega_Z^M \end{bmatrix}$$

$$(8) \quad \underline{n}_1 = \begin{bmatrix} n_X \\ n_Y \\ n_Z \end{bmatrix}$$

Aus den ersten drei Zeilen und den ersten drei Spalten der Matrix F von Gleichung (5) und (5a) kann eine Teilmatrix $F_{11}$ gebildet werden. Aus den ersten drei Zeilen der vierten bis sechsten Spalte der Matrix F kann eine Teilmatrix $F_{12}$ gebildet werden, und aus den ersten drei Zeilen der siebenten bis neunten Spalte der Matrix F kann eine Teilmatrix $F_{13}$ gebildet werden. Damit wird die Zustandsgleichung (5):

$$(9) \quad \begin{bmatrix} \dot{X}_1 \\ \dot{X}_2 \\ \dot{X}_3 \end{bmatrix} = \begin{bmatrix} F_{11} & F_{12} & F_{13} \\ [0] & [0] & [0] \\ [0] & [0] & [0] \end{bmatrix} \cdot \begin{bmatrix} X_1 \\ X_2 \\ X_3 \end{bmatrix} + \begin{bmatrix} u_1 \\ \underline{0} \\ \underline{0} \end{bmatrix} + \begin{bmatrix} n_1 \\ \underline{0} \\ \underline{0} \end{bmatrix}$$

wobei mit $\begin{bmatrix} 0 \end{bmatrix}$ jeweils eine Nullmatrix mit drei Zeilen und drei Spalten und mit $\underline{0}$ ein Nullvektor mit drei Elementen bezeichnet ist.

Diese Zustandsgleichung kann der Auslegung eines optimalen Schätzers zugrundegelegt werden. Dabei ist der Vektor $\underline{u}$ als deterministische Eingangsgröße zu betrachten.

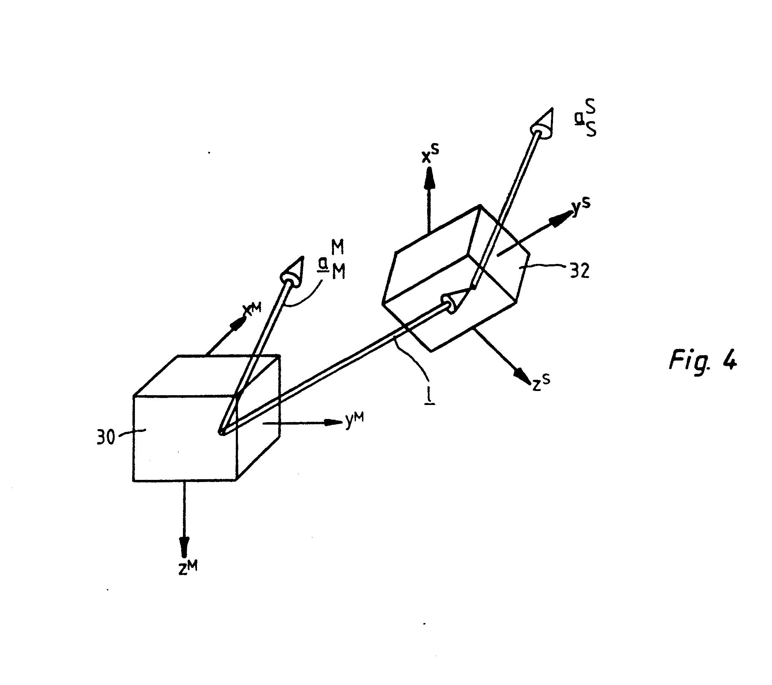

Zur Ableitung einer Meßgröße für die Zustandsschätzung wird die inertiale Beschleunigung $\underline{a}^M_{IM}$ des Mutternavigationssystems 30 durch seine Komponenten im Koordinatensystem $x^M$ , $y^M$ , $z^M$ des Mutternavigationssystems 30 und im Koordinatensystem $x^S$ , $y^S$ , $z^S$ des mit dem Mutternavigationssystem 30 elastisch verbundenen Tochternavigationssystem 32 betrachtet (Fig.4). Mit $\underline{1}$ ist der Abstandsvektor vom Mutternavigationssystem 30 zum Tochternavigationssystem 32 bezeichnet.

Es wird angenommen, daß der Betrag des Abstandsvektors $\underline{1}$ zwischen Mutter- und Tochternavigationssystem 30 bzw. 32 sich nicht ändert. Es ändert sich nur dessen Richtung. Es wird weiterhin angenommen, daß die im Tochternavigationssystem gewonnene Beschleunigung hinsichtlich der Hebelarmeffekte korrigiert ist, also hinsichtlich der Unterschiede der Beschleunigungen zwischen Mutter- und Tochternavigationssystem, die sich rein aus der Geometrie ergeben und auch bei vollständig starrer Verbindung zwischen Mutter- und Tochternavigationssystem auftreten würden. Es gilt dann für die Differenzen der Beschleunigungskomponenten in beiden Systemen:

$$(10) \quad \begin{bmatrix} \bar{a}^S_x - a^M_x \\ \bar{a}^S_y - a^M_y \\ \bar{a}^S_z - a^M_z \end{bmatrix} = \begin{bmatrix} H_1 & [0] & [0] \end{bmatrix} \cdot \begin{bmatrix} \underline{x}_1 \\ \underline{x}_2 \\ \underline{x}_3 \end{bmatrix} + \begin{bmatrix} r_x \\ r_y \\ r_z \end{bmatrix}$$

In Gleichung (10) ist

$$
(11) \quad H_1 = \begin{bmatrix} 0 & -a_z^M & a_y^M \\ a_z^M & 0 & -a_x^M \\ -a_y^M & a_x^M & 0 \end{bmatrix} ,
$$

und $\underline{v} = \begin{bmatrix} r_x & r_y & r_z \end{bmatrix}^T$ das Beschleunigungsmesser-rauschen.

Diese Gleichung (10) ist von der allgemeinen Form

$$
(12) \quad \underline{z} = H \underline{x} + \underline{v}
$$

mit dem Vektor $\underline{x}$ aus Gleichung (9) und (5), H als Meßmatrix und $\underline{v}$ als Meßrauschen.

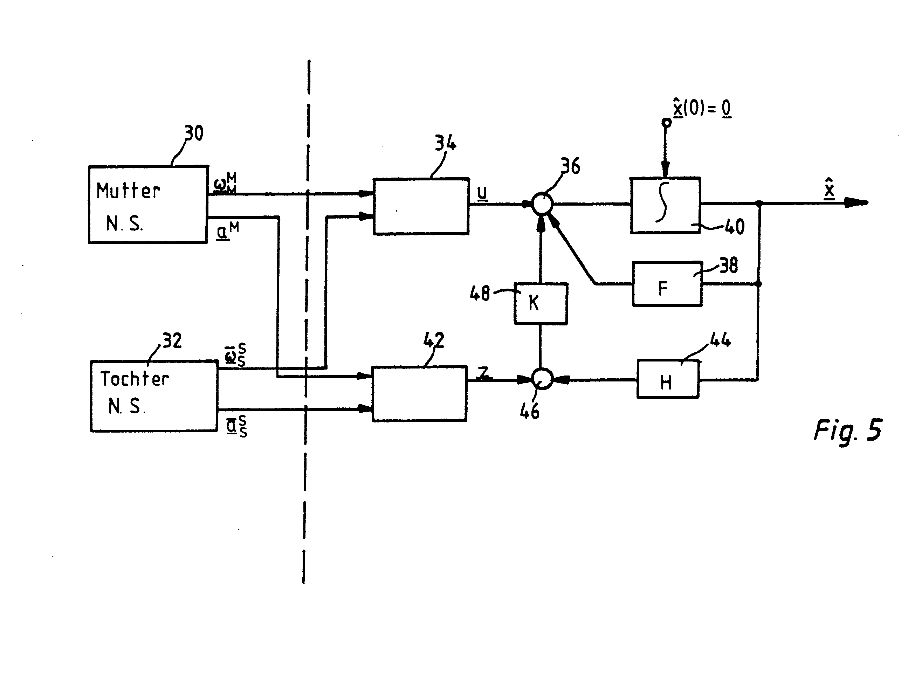

Fig.5 zeigt ein Blockdiagramm der Signalverarbeitung zur Erzeugung eines Schätzwertes $\hat{\underline{x}}$ für den Zustandsvektor $\underline{x}$.

In Fig.5 ist wieder mit 30 das Mutternavigationssystem und mit 32 das Tochternavigationssystem bezeichnet. Das Mutternavigationssystem 30 liefert die Komponenten $\omega_x^M, \omega_y^M, \omega_z^M$ seiner Drehgeschwindigkeit $\underline{\omega}_{IM}^M$ im Koordinatensystem $x^M, y^M, z^M$. Das Mutternavigationssystem 30 liefert ferner die Komponenten $a_x^M, a_y^M, a_z^M$ seiner Linearbeschleunigung $\underline{a}_{IM}^M$ in dem Koordinatensystem $x^M, y^M, z^M$. Diese Komponenten werden durch Strapdown-Kreisel bzw. Beschleunigungsmesser gemessen. In entsprechender Weise liefert das Tochternavigationssystem 32 die Komponenten $\bar{\omega}_x^S$, $\bar{\omega}_y^S$, $\bar{\omega}_z^S$ der in ihm durch Strapdown-Kreisel gemessenen Winkelgeschwindigkeiten im Koordinatensystem $x^S$, $y^S$, $z^S$. Das Tochternavigationssystem 32 liefert weiterhin die in ihm durch Beschleunigungsmesser gemessenen Komponenten $\bar{a}_x^S$, $\bar{a}_y^S$ und $\bar{a}_z^S$ der Beschleunigung $\underline{\bar{a}}^S$ im Koordinatensystem $x^S$, $y^S$ und $z^S$.

Wie durch Block 34 dargestellt ist, wird aus den Komponenten der Winkelgeschwindigkeiten des Mutter- und Tochternavigationssystems 30 bzw. 32 der Vektor $\underline{u}$ von Gleichung (5) und (7) gebildet, d.h. ein Vektor, dessen drei nicht verschwindende Komponenten die Differenzen der einander zugeordneten Drehgeschwindigkeitskomponenten sind, also $\bar{\omega}_x^S - \omega_x^M$ usw.

In einem "Summierpunkt" 36 wird zu diesem Vektor $\underline{u}$ der am Ausgang erhaltene Schätzwert $\underline{\hat{x}}$ des Zustandsvektors $\underline{x}$ multipliziert mit der durch Block 38 dargestellten Matrix F von Gleichung (5) und (9) addiert. Der so erhaltene Vektor wird, wie durch Block 40 dargestellt ist, über die Zeit integriert, d.h. jede Komponente des Vektors wird zeitlich integriert. Als Anfangswert wird ein Schätzvektor $\underline{\hat{x}}(0) = \underline{0}$ angenommen, also ein Vektor, dessen sämtliche Komponenten null sind. Das liefert nach Gleichung (5) und (9) einen Schätzwert $\underline{\hat{x}}$ für den Zustandsvektor $\underline{x}$.

Es wird weiterhin, wie durch Block 42 dargestellt ist, aus den Beschleunigungskomponenten des Mutter- und des Tochternavigationssystems 30 bzw. 32, der

Vektor $\underline{z}$ von Gleichung (10) und (12) gebildet, d.h. ein Vektor, dessen Komponenten die Differenzen der einander zugeordneten Beschleunigungskomponenten sind, also $\bar{\underline{a}}_x^S - a_x^M$ usw. Der Schätzwert $\hat{\underline{x}}$ des Zustandsvektors $\underline{x}$ wird mit der Meßmatrix H von Gleichung (10) und (12), dargestellt durch Block 44, multipliziert. In einem "Summierpunkt" 46 wird die Differenz des Vektors $\underline{z}$ und des Vektors $H\underline{\hat{x}}$ gebildet. Diese Differenz wird - multipliziert mit einer durch Block 48 dargestellten Matrix K, der Kalmanfilter-Verstärkungsmatrix - auf den "Summierpunkt" 36 aufgeschaltet.

Wenn die gemessene Beschleunigungsdifferenz von der sich aus dem Schätzwert $\hat{\underline{x}}$ des Zustandsvektors $\underline{x}$ und der Meßmatrix H ergebenden Beschleunigungsdifferenz abweicht, dann erfolgt über den "Summierpunkt" 36 und die Integration eine Korrektur des Schätzwertes $\hat{\underline{x}}$.

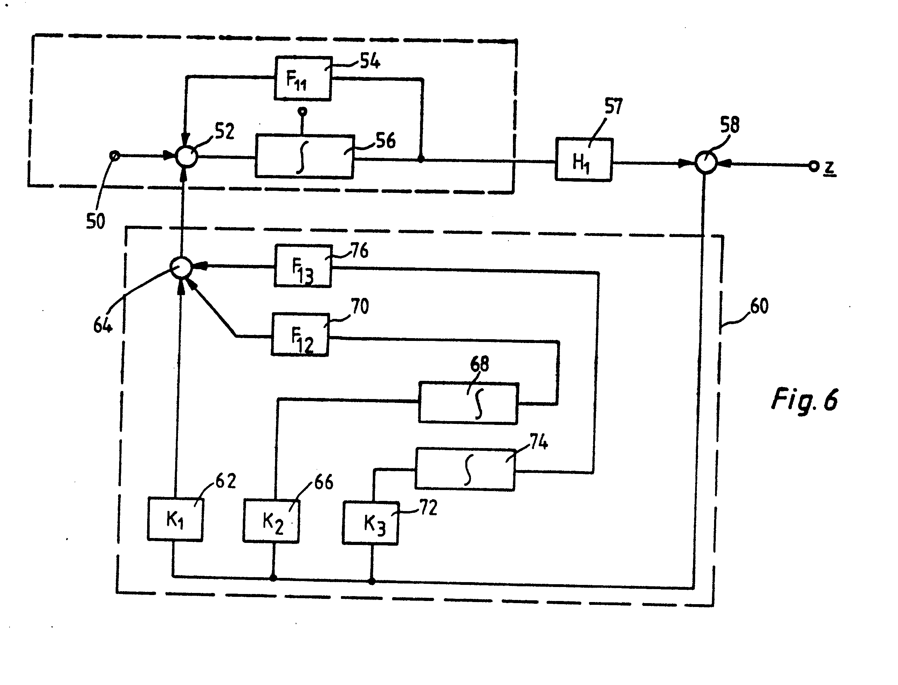

Unter Berücksichtigung der Teilvektoren in Gleichung (6), (7) und (8) sowie der Zustandsgleichung (5) und der zugehörigen Meßgleichung (10) ergibt sich für den optimalen Schätzwert die in Fig.6 dargestellte gegenüber Fig.5 detailliertere Signalverarbeitung.

Die Signalverarbeitung von Fig.6 entspricht im wesentlichen auch der verallgemeinerten Form von Fig.1.

An einem Eingang 50 erscheint der Teilvektor $\underline{u}_1$ gemäß Gleichung (7), der nach Art von Fig. 5 aus den gemessenen Winkelgeschwindigkeiten von Mutter- und Tochternavigationssystem 30 bzw. 32 gebildet

ist. Diesem Vektor $\underline{u}_1$ an einem "Summierpunkt" 52 überlagert ist der mit der Matrix $F_{11}$ multiplizierte Schätzwert $\hat{\underline{x}}_1$ des Teilvektors $\underline{x}_1$ , wobei

$$(13) \quad \hat{\underline{X}}_1 = \begin{bmatrix} \hat{\varphi} \\ \hat{\vartheta} \\ \hat{\psi} \end{bmatrix} = \hat{\underline{\Phi}}$$

Die Matrix $F_{11}$ ist dabei durch einen Block 54 repräsentiert. Der an dem "Summierpunkt" 52 erhaltene Vektor wird integriert durch Integration jedes seiner Elemente, was durch Block 56 dargestellt ist und wodurch der besagte Schätzwert $\hat{\underline{x}}_1$ erhalten wird. Das entspricht etwa dem Summierpunkt 36, und den Blöcken 38 und 40 von Fig. 5. Die Integration erfolgt mit einem geschätzten Anfangsvektor $\hat{\underline{x}}_1(0)$.

Der Schätzwert $\hat{\underline{x}}_1$ wird mit der Meßmatrix $H_1$ gemäß Gleichung (10) multipliziert, wie durch Block 57 dargestellt ist. Der so erhaltene Vektor wird in einem Summierpunkt 58 von dem Vektor $\underline{z}$ subtrahiert. Die Differenz liefert die Eingangsgrößen für den optimalen Schätzer 60.

Wenn die Winkel $\hat{\varphi}$, $\hat{\vartheta}$, $\hat{\psi}$ des Vektors $\hat{\underline{x}}_1$ der Realität entsprächen, dann würde $H_1 \cdot \hat{\underline{x}}_1$ mit den als fehlerfrei angenommenen, gemessenen Elementen der Meßmatrix $H_1$ , die ja Beschleunigungskomponenten im Mutternavigationssystem sind, einen dem Vektor $\underline{z}$ entsprechenden Vektor ergeben. Der Summierpunkt 58 würde als Differenz einen Nullvektor liefern. Der an dem Summierpunkt tatsächlich auftretende Vektor liefert daher ein Maß für die Abweichung von Modell und Realität.

Der Vektor $\underline{z} - H_1 \underline{\hat{x}}_1$ von dem Summierpunkt 58 wird mit einer Matrix $K_1$ multipliziert, wie durch einen Block 62 dargestellt ist. Der so erhaltene Vektor wird unmittelbar auf einen "Summierpunkt" 64 aufgeschaltet. Weiterhin wird der Vektor $\underline{z} - H_1 \underline{\hat{x}}_1$ mit einer Matrix $K_2$ multipliziert, die durch Block 66 dargestellt ist. Der so erhaltene Vektor wird integriert, was durch Block 68 dargestellt ist. Das Integral liefert einen Schätzwert

$$(14) \qquad \underline{\hat{X}}_2 = \begin{bmatrix} \hat{B}_X \\ \hat{B}_Y \\ \hat{B}_Z \end{bmatrix}$$

für die Biasdriften der Kreisel. Dieser Schätzwert $\underline{\hat{x}}_2$ wird mit der Matrix $F_{12}$ von Gleichung (5) und (9) multipliziert. Das ist durch Block 70 dargestellt. Der so erhaltene Vektor ist ebenfalls auf den Summierpunkt 64 aufgeschaltet. Schließlich wird der Vektor $\underline{z} - H_1 \underline{\hat{x}}_1$ mit einer Matrix $K_3$ multipliziert, dargestellt durch Block 72. Der so erhaltene Vektor wird integriert, was durch einen Block 74 dargestellt ist. Die Integration liefert einen Schätzwert

$$(15) \qquad \underline{\hat{X}}_3 = \begin{bmatrix} D\hat{S}F_X \\ D\hat{S}F_Y \\ D\hat{S}F_Z \end{bmatrix}$$

für die Skalenfaktorfehler. Dieser Schätzwert wird mit der Matrix $F_{13}$ von Gleichung (5) und (9) multipliziert. Das ist durch Block 76 dargestellt. Auch der so erhaltene Vektor ist auf den Summierpunkt 64 aufgeschaltet. Die Vektorsumme von dem Summierpunkt 64 bildet den Ausgang des optimalen Schätzers 60, der wiederum auf den Summierpunkt 52 aufgeschaltet ist.

Durch die beschriebene Signalverarbeitung werden Schätzwerte für die Winkel $\hat{\varphi}$, $\hat{\vartheta}$ und $\hat{\psi}$ zwischen Mutter- und Tochternavigationssystem 30 bzw. 32 erhalten. Es erfolgt also eine gegenseitige Lagebestimmung. Weiterhin erhält man optimale Schätzwerte für den Bias $\hat{B}_x$, $\hat{B}_y$, $\hat{B}_z$ und für den Skalenfaktorfehler $\hat{DSF}_x$, $\hat{DSF}_y$ und $\hat{DSF}_z$ der Drehgeschwindigkeitssensoren des Tochternavigationssystems 32.

Diese Schätzwerte können bei der Navigation berücksichtigt werden. Es erfolgt also eine Kalibrierung des Tochternavigationssystems 32.

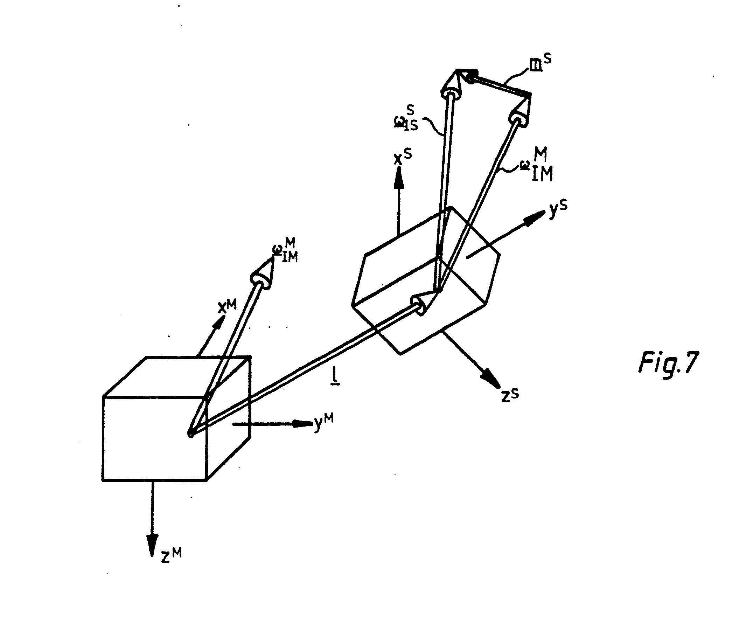

In vielen Fällen kann davon ausgegangen werden, daß die durch den Winkelvektor $\underline{\Phi}$ beschriebene Lage zwischen Tochter- und Mutternavigationssystem 32 bzw. 30 und den zugehörigen Koordinatensystemen $x^S$, $y^S$, $z^S$ bzw. $x^M$, $y^M$, $z^M$ im Mittel konstant ist. Durch Restflexibilität der Verbindung zwischen den beiden Navigationssystemen tritt eine geringe Drehgeschwindigkeit $\underline{\omega}_{MS}$ des Tochtersystems gegenüber dem Muttersystem auf, die ein normalverteilter stochastischer Prozeß mit dem Erwartungswert null ist und zu stochastischen Schwankungen des Winkelvektors $\underline{\Phi}$ führt, deren Amplituden kleiner sind als die gewünschte Ausrichtgenauigkeit (s.a. Fig.7). Dadurch ergibt sich ein wesentlich vereinfachtes Zustandsmodell und in dessen Folge eine entsprechend vereinfachte Signalverarbeitung.

Es kann unter diesen Bedingungen

$$(16) \qquad \underline{\omega}_{MS}(t) = \underline{m}^S(t)$$

und

$$(17) \qquad \underline{m}^S(t) = \underline{N}(\underline{0}, \sigma^2)$$

gesetzt werden. Darin bedeutet $N(0, \sigma^2)$ einen normalverteilten stochastischen Prozeß mit dem Mittelwert null und der Varianz $\sigma^2$. Damit ergibt sich für eine stochastische zufällige, d.h. nicht determinierte Lageänderung $\underline{\Phi}$ :

$$(18) \qquad \underline{\dot{\Phi}} \approx \underline{m}^S(t)$$

Da der Nullpunktfehler (Bias) und der Skalenfaktorfehler der Kreisel im Tochternavigationssystem als "zufällig aber konstant" angesehen werden, gilt hier für die zeitliche Änderung des Zustandsvektors entsprechend Gleichung (5)

$$(19) \qquad \begin{bmatrix} \underline{\dot{\Phi}} \\ \underline{\dot{B}} \\ \underline{\dot{DSF}} \end{bmatrix} = [0] \begin{bmatrix} \underline{\Phi} \\ \underline{B} \\ \underline{DSF} \end{bmatrix} + \begin{bmatrix} \underline{m}^S(t) \\ \underline{0} \\ \underline{0} \end{bmatrix}$$

also

$$(20) \qquad \underline{\dot{x}} = \underline{w},$$

wobei $\underline{w}(t)$ das Systemrauschen ist. Im Vergleich zu Gleichung (5) für den "dynamischen" Fall ist in dem durch Gleichung (19) definierten Fall die Matrix F = $[0]$ und die deterministische Eingangsgröße $\underline{u} = \underline{0}$.

Ausgehend von dem Zustandsmodell nach Gleichung (19) sind nun geeignete Meßgrößen zu definieren, die einer Signalverarbeitung zur optimalen Schätzung des konstanten aber unbekannten Zustandsvektors zugeführt werden können.

Wird auch hier wieder von der Messung der Beschleunigung in beiden Koordinatensystemen $x^M$, $y^M$, $z^M$ und $x^S$, $y^S$, $z^S$ ausgegangen, so gilt als Meßgleichung die Gleichung (10).

Bei dem hier betrachteten statischen Fall können außer den Beschleunigungen auch die in beiden Koordinatensystemen $x^M$, $y^M$, $z^M$ des Mutternavigationssystems 30 und $x^S$, $y^S$, $z^S$ des Tochternavigationssystems 32 gemessenen Drehgeschwindigkeiten zur Identifikation des konstanten Zustandsvektors herangezogen werden. Das geschieht - ähnlich wie es in bezug auf die Beschleunigung oben beschrieben wurde - in der Weise, daß der inertiale Drehgeschwindigkeitsvektor $\underline{\omega}_{IM}$ einmal durch seine Komponenten im Koordiantensystem $x^M$, $y^M$, $z^M$ und einmal durch seine Komponenten im Koordinatensystem $x^S$, $y^S$, $z^S$ dargestellt wird. In dem "statischen" Fall unterscheiden sich diese Komponenten nur durch die stochastische Vibration $\underline{m}^S$ des Koordinatensystems $x^S$, $y^S$, $z^S$ gegen das Koordinatensystem $x^M$, $y^M$, $z^M$, sowie der statischen Lagedifferenz $\underline{\Phi}$ beider Systeme.

Ein Gesamtmodell für die Zustandsschätzung kann hier in Form der Maßgleichung für die Beschleunigungsmessung und für die Drehgeschwindigkeitsmessung abgeleitet werden:

$$
(21)
\begin{bmatrix}
\bar{a}_X^S - a_X^M \\
\bar{a}_Y^S - a_Y^M \\
\bar{a}_Z^S - a_Z^M \\
\bar{\omega}_X^S - \omega_X^M \\
\bar{\omega}_Y^S - \omega_Y^M \\
\bar{\omega}_Z^S - \omega_Z^M
\end{bmatrix}
=
\begin{bmatrix}
0 & -a_Z^M & a_Y^M & 0 & 0 & 0 & 0 & 0 & 0 \\
a_Z^M & 0 & -a_X^M & 0 & 0 & 0 & 0 & 0 & 0 \\
-a_Y^M & a_X^M & 0 & 0 & 0 & 0 & 0 & 0 & 0 \\
0 & -\omega_Z^M & \omega_Y^M & 1 & 0 & 0 & \bar{\omega}_X^S & 0 & 0 \\
\omega_Z^M & 0 & -\omega_X^M & 0 & 1 & 0 & 0 & \bar{\omega}_Y^S & 0 \\
-\omega_Y^M & \omega_X^M & 0 & 0 & 0 & 1 & 0 & 0 & \bar{\omega}_Z^S
\end{bmatrix}
\begin{bmatrix}
\varphi \\
\vartheta \\
\psi \\
B_X \\
B_Y \\
B_Z \\
DSF_X \\
DSF_Y \\
DSF_Z
\end{bmatrix}
+
\begin{bmatrix}
r_X \\
r_Y \\
r_Z \\
n_X + m_X^S \\
n_Y + m_Y^S \\
n_Z + m_Z^S
\end{bmatrix}
$$

Das ist eine Gleichung von der Form

$$
(22)
\begin{bmatrix}
\underline{Z}_1 \\
\underline{Z}_2
\end{bmatrix}
=
\begin{bmatrix}
H_1 & [\,0\,] & [\,0\,] \\
H_2 & [\,I\,] & [\Omega_{IS}^S]
\end{bmatrix}
\cdot
\begin{bmatrix}
\underline{X}_1 \\
\underline{X}_2 \\
\underline{X}_3
\end{bmatrix}
+
\begin{bmatrix}
\underline{V}_1 \\
\underline{V}_2
\end{bmatrix}
$$

Aus Gleichung (22) können unmittelbar folgende Schlußfolgerungen gezogen werden:

Der Winkelvektor $\underline{\Phi}$ kann aus Beschleunigungs- und/oder Drehgeschwindigkeitsmessungen identifiziert werden. Sowohl $\underline{z}_1$ als auch $\underline{z}_2$ enthalten beim Ausmultiplizieren einen Term mit $\underline{x}_1$ . Zur Identifizierung von $\underline{B}$ und $\underline{DSF}$ sind Drehgeschwindigkeitsmanöver erforderlich. Der Teilvektor $\underline{z}_1$ enthält beim Ausmultiplizieren keine Terme mit $\underline{x}_2$ oder $\underline{x}_3$ . Diese Terme treten nur in dem Teilvektor $\underline{z}_2$ auf.

Ausgehend von der statischen Zustandsgleichung (19) und der Meßgleichung (21) oder (22) läßt sich die Signalverarbeitung zur optimalen Ausrichtung und Kalibrierung mit Hilfe eines "statischen Kalmanfilters" angeben, wobei für den optimalen Schätzwert auch hier gilt

$$\dot{\hat{\underline{x}}} = K (\underline{z} - H \, \hat{\underline{x}} )$$

Dieses "statische Kalmanfilter" ist in der Arbeitsweise einem Parameterschätzer, der nach der Methode der gewichteten minimalen Fehlerquadrate arbeitet, äquivalent. Mit den Definitionen für $\underline{x}_1$ , $\underline{x}_2$ , $\underline{x}_3$ gemäß Gleichungen (6) und den Definitionen gemäß Gleichungen (21) und (22) ergibt sich dann

$$(23) \quad \begin{bmatrix} \dot{\hat{X}}_1 \\ \dot{\hat{X}}_2 \\ \dot{\hat{X}}_3 \end{bmatrix} = \begin{bmatrix} [K_{11}][K_{12}] \\ [K_{21}][K_{22}] \\ [K_{31}][K_{32}] \end{bmatrix} \left\{ \begin{bmatrix} Z_1 \\ Z_2 \end{bmatrix} - \begin{bmatrix} [H_1] & [0] & [0] \\ [H_2] & [I] & [\Omega_{IS}] \end{bmatrix} \cdot \begin{bmatrix} \hat{X}_1 \\ \hat{X}_2 \\ \hat{X}_3 \end{bmatrix} \right\}$$

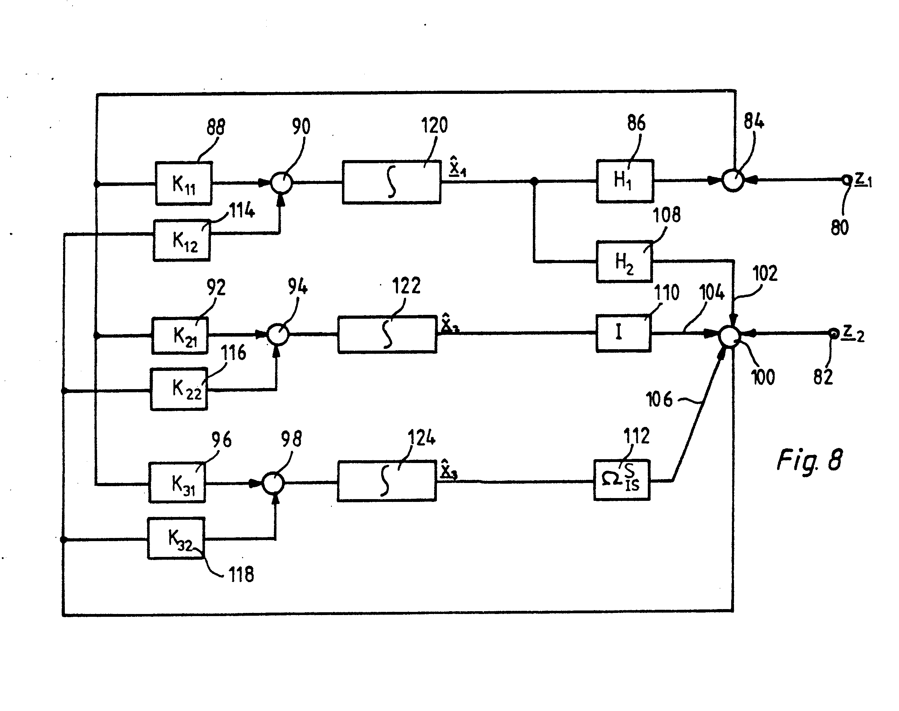

Darin sind die $K_{ij}$ jeweils Matrizen von drei Zeilen und drei Spalten. Diese Gleichung (23) liegt der in Fig. 8 dargestellten Signalverarbeitung zugrunde.

Meßgrößen sind an "Eingängen" 80 und 82 die Vektoren $z_1$ und $z_2$, die aus den Differenzen der in dem Tochternavigationssystem 32 und dem Mutternavigationssystem 30 gemessenen Beschleunigungen bzw. Drehgeschwindigkeiten gebildet sind.

Der Vektor $z_1$ wird in einem "Summierpunkt" 84 mit einem Vektor verglichen, der sich aus einem Schätzwert $\hat{x}_1$ des Winkelvektors $x_1$ (oder $\Phi$) durch Multiplikation mit der Teilmatrix $H_1$ ergibt und die dem Schätzwert $\hat{x}_1$ entsprechende Differenz der Beschleunigungskomponenten darstellt. Die Multiplikation mit der Teilmatrix $H_1$ ist dabei durch einen Block 86 dargestellt. Der so am Summierpunkt 84 erhaltene erste Differenzvektor wird einmal mit der Teilmatrix $K_{11}$ (Gleichung (23)) multipliziert, was durch Block 88 dargestellt ist. Der erhaltene Vektor ist auf einen "Summierpunkt" 90 aufgeschaltet. Weiterhin wird der erste Differenzvektor mit der Teilmatrix $K_{21}$ multipliziert, was durch Block 92 dargestellt ist. Der erhaltene Vektor ist auf einen "Summierpunkt" 94 aufgeschaltet. Schließlich wird der erste Differenzvektor mit der Teilmatrix $K_{31}$ multipliziert, was durch Block 96 dargestellt ist. Der erhaltene Vektor ist auf einen "Summierpunkt" 98 aufgeschaltet.

Der Vektor $z_2$ wird in einem "Summierpunkt" 100 mit einer Summe von Vektoren verglichen, die durch Pfeile 102,104 und 106 angedeutet sind. Der durch Pfeil 102 angedeutete Vektor ergibt sich aus dem Schätzwert des Winkelvektors $\hat{x}_1$ durch Multiplikation mit der Teilmatrix $H_2$, die durch Block 108 dargestellt ist. Der durch Pfeil 104 angedeutete Vektor ergibt sich aus einem Schätzwert $\hat{x}_2$ des die

Nullpunktfehler enthaltenden Teilvektors $\underline{x}_2$ durch Multiplikation mit der Einheitsmatrix I, die durch Block 110 dargestellt ist. Der durch Pfeil 106 dargestellte Vektor ergibt sich aus einem Schätzwert $\hat{\underline{x}}_3$ des die Skalenfaktorfehler enthaltenden Teilvektors $\underline{x}_3$ durch Multiplikation mit der Matrix $\Omega^S_{IS}$, die durch Block 112 dargestellt ist. Die Schätzwerte $\hat{\underline{x}}_1$ $\hat{\underline{x}}_2$ und $\hat{\underline{x}}_3$ werden in noch zu beschreibender Weise erhalten. Der aus dem Vergleich erhaltene zweite Differenzvektor wird mit der Teilmatrix $K_{12}$ multipliziert, was durch Block 114 dargestellt ist. Der so erhaltene Vektor ist auf den "Summierpunkt" 90 aufgeschaltet, wird also zu dem Vektor von Block 88 addiert. Der zweite Differenzvektor wird weiterhin mit der Teilmatrix $K_{22}$ multipliziert, was durch Block 116 dargestellt ist. Der so erhaltene Vektor ist auf den "Summierpunkt" 94 aufgeschaltet. Schließlich wird der zweite Differenzvektor mit der Teilmatrix $K_{32}$ multipliziert, was durch einen Block 118 dargestellt ist. Der so erhaltene Vektor ist auf den "Summierpunkt" 98 aufgeschaltet.

Der an dem Summierpunkt 90 erhaltene Summenvektor wird zeitlich integriert, was durch Block 120 dargestellt ist. Diese Integration liefert den besagten Schätzwert $\hat{\underline{x}}_1$ für den Winkelvektor.

Der an dem Summierpunkt 94 erhaltene Summenvektor wird zeitlich integriert, was durch Block 122 dargestellt ist. Diese Integration liefert den Schätzwert $\hat{\underline{x}}_2$ für den Vektor der Nullpunktfehler.

Der an dem Summierpunkt 98 erhaltene Summenvektor wird zeitlich integriert, was durch Block 124 dargestellt ist. Diese Integration liefert den Schätzwert $\hat{\underline{x}}_3$ für den Vektor der Skalenfaktorfehler.

Wenn die Ausgänge der integrierenden Mittel 120,122 und 124 die Vektoren $\underline{x}_1$, $\underline{x}_2$ und $\underline{x}_3$ korrekt wiedergeben, dann entsprechen die davon nach Multiplikation mit Teilmatrizen auf die "Summierpunkte" 84 bzw. 100 aufgeschalteten Vektoren bis auf die Rauschanteile den Meßgrößen $\underline{z}_1$ bzw. $\underline{z}_2$. Der erste und der zweite Differenzvektor werden null. Das ist der Gleichgewichtszustand. Wenn die Schätzwerte $\hat{\underline{x}}_1$, $\hat{\underline{x}}_2$ und $\underline{x}_3$ von den gemessenen Werten abweichen, erfolgt mit den Kalmanfilter-Verstärkungsfaktoren in Form der Matrizen $K_{ij}$ über die integrierenden Mittel 120,122,124 eine Korrektur, so daß die Schätzwerte auf den Gleichgewichtszustand eingeregelt werden. An den Ausgängen der integrierenden Mittel 120,122,124 können dann Schätzwerte für die Lagewinkel, die Nullpunktfehler und die Skalenfaktorfehler zur Ausrichtung und Kalibrierung des Tochternavigationssystems 32 abgenommen werden. Im Vergleich zu Fig.6 fehlt bei der Signalverarbeitung nach Fig.8 die gesamte Zustandsdynamik. Die Zustandsschätzung geht damit über in eine Parameter-Identifikation, wobei als Meßgrößen die Differenzen der Beschleunigungs- und Drehgeschwindigkeitskomponenten benutzt werden, die von dem Mutter- und Tochternavigationssystem gemessen werden.

<u>Patentansprüche</u>

1. Anordnung zur Bestimmung von Fehlern eines Tochternavigationssystems (32) relativ zu einem Mutternavigationssystem (30), die jedes Trägheitssensoren aufweisen, gekennzeichnet durch

(a) integrierende Mittel (40;56,68,74,120,122, 124) zur Erzeugung von Schätzwerten ($\hat{\underline{x}}_1$, $\hat{\underline{x}}_2$, $\hat{\underline{x}}_3$) der Fehler,

(b) Mittel zur Eingabe von Meßgrößen ($\underline{z},\underline{u}$; $\underline{z}_1$ $\underline{z}_2$), die von den Trägheitssensoren gemessen sind,

(c) Transformationsmittel (44;57;86,108,110, 112) zur Transformation von Schätzwerten der Fehler in Schätzwerte der besagten Meßgrößen ($\underline{z}$;$\underline{z}_1$ ,$\underline{z}_2$),

(d) Mittel (46;58;84,100) zur Bildung der Differenzen zwischen den eingegebenen Meßgrößen ($\underline{z}$;$\underline{z}_1$ ,$\underline{z}_2$) und den Schätzwerten dieser Meßgrößen und

(e) Mittel (48;62,66,72) zum Aufschalten der besagten Differenzen auf die besagten integrierenden Mittel (40;56,68,74;120, 122,124).

0179197

2. Anordnung nach Anspruch 1, dadurch gekennzeichnet, daß

(a) die zu schätzenden Fehler Lagefehler ($\varphi$, $\vartheta$, $\psi$) zwischen Tochternavigationssystem und Mutternavigationssystem umfassen,

(b) die Meßgrößen die Differenzen entsprechender Komponenten der Drehgeschwindigkeiten umfassen, die durch Tochter- und Mutternavigationssystem gemessen werden,

(c) die integrierenden Mittel (40,56) von den Differenzen ($\underline{u}$) der Drehgeschwindigkeiten zur Bildung von Schätzwerten der Lagefehler ($\hat{\varphi}$, $\hat{\vartheta}$, $\hat{\psi}$) beaufschlagt sind und

(d) die Meßgrößen weiterhin Beschleunigungen umfassen, die durch Mutter- und Tochternavigationssystem gemessen werden und

(e) die Transformationsmittel (57) von den Lagefehlern ($\varphi$, $\vartheta$, $\psi$) beaufschlagt sind und Schätzwerte von Beschleunigungsmeßgrößen zum Vergleich mit entsprechenden gemessenen Beschleunigungsmeßgrößen liefern.

3. Anordnung nach Anspruch 2, dadurch gekennzeichnet, daß

(a) die Transformationsmittel (14) Beschleunigungskomponenten aus einem dem Tochternavigationssystem (32) zugeordneten Koordinatensystem ($x^S$, $y^S$, $z^S$) in ein dem Mutternavigationssystem (30) entsprechendes Koordinatensystem ($x^M$, $y^M$, $z^M$) transformieren,

(b) Mittel (16) zur Bildung der Differenzen der transformierten Beschleunigungskomponenten und der entsprechenden Beschleunigungssignale des Mutternavigationssystems (30) vorgesehen sind und

(c) die Differenzen auf Schätzer- und Reglermittel (20) aufgeschaltet sind, welche Korrekturgrößen liefern, die am Eingang der integrierenden Mittel (12) den Differenzen der Drehgeschwindigkeitssignale überlagert sind.

4. Anordnung nach Anspruch 2, dadurch gekennzeichnet, daß

(a) die Beschleunigungsmeßgrößen die Differenzen der einander entsprechenden, von dem Tochternavigationssystem (32) und von dem Mutternavigationssystem (30) in dem jeweils zugeordneten Koordinatensystem ($x^S$, $y^S$, $z^S$, bzw. $x^M$, $y^M$, $z^M$) gemessenen Beschleunigungskomponenten sind,

(b) die Transformationsmittel (57) Mittel zur Linearkombination von Schätzwerten der Lagewinkel und gemessenen Beschleunigungskomponenten des Mutternavigationssystems (30) enthalten, die als die Schätzwerte von Beschleunigungsgrößen Schätzwerte der Differenzen der Beschleunigungskomponenten liefern und

(c) die Differenzen der besagten Differenzen der gemessenen Beschleunigungskomponenten und ihrer Schätzwerte als Eingangsvektor auf Schätzer- und Reglermittel (60) geschaltet sind, welche Korrekturgrößen liefern, die am Eingang der integrierenden Mittel (56) den Differenzen der Drehgeschwindigkeitssignale überlagert sind.

5. Anordnung nach Anspruch 4, dadurch gekennzeichnet, daß die Schätzer- und Reglermittel (60)

(a) erste Matrixmittel (62) zur Multiplikation des von den Differenzen der Differenzen von Beschleunigungskomponenten gebildeten Eingangsvektors mit einer ersten Matrix $(K_1)$ enthalten sowie

(b) zweite Matrixmittel (66) zur Multiplikation des Eingangsvektors mit einer zweiten Matrix $(K_2)$,

(c) zweite integrierende Mittel (68) zur Integration des so erhaltenen Vektors zur Bildung eines Schätzwertes $(\hat{\underline{x}}_2)$ des Vektors der Nullpunktfehler $(\hat{B}_x , \hat{B}_y , \hat{B}_z )$ der Drehgeschwindigkeitssensoren

(d) dritte Matrixmittel (72) zur Multiplikation des Eingangsvektors mit einer dritten Matrix $(K_3)$,

(e) dritte integrierende Mittel (74) zur Integration des so erhaltenen Vektors zur Bildung eines Schätzwertes ($\underline{\hat{x}}_3$) des Vektors der Skalenfaktorfehler der Drehgeschwindigkeitssensoren

(f) vierte Matrixmittel (70) zur Multiplikation des Schätzwertes ($\underline{\hat{x}}_2$) des Vektors der Nullpunktfehler mit der negativen Einheitsmatrix ($F_{12}$)

(g) fünfte Matrixmittel (76) zur Multiplikation des Schätzwertes ($\underline{\hat{x}}_3$) des Vektors der Skalenfaktorfehler mit einer Matrix ($F_{13}$), die nur in der Diagonalen Elemente in Form der negativen, von dem Tochternavigationssystem gemessenen Drehgeschwindigkeitskomponenten aufweist, und

(h) Mittel (64) zum Addieren der von den dritten, vierten und fünften Matrixmitteln (72,70,76) gebildeten Vektoren zur Bildung eines Korrekturwertes, der den durch die integrierenden Mittel (56) zu integrierenden Differenzen der gemessenen Drehgeschwindigkeitskomponenten ($\underline{u}$) überlagert ist.

6.  Anordnung nach Anspruch 2, dadurch gekennzeichnet, daß

(a) Mutter- und Tochternavigationssystem bis auf stochastische Vibrationen kleiner Amplitude im wesentlichen starr miteinander verbunden sind,

(b) auf einen Schätzer für die Ausrichtung und Kalibrierung des Tochternavigationssystems die Differenzen ($\underline{z}_1$) der von Tochter- und Mutternavigationssystem (32 bzw. 30) in den zugehörigen Koordinatensystemen gemessenen Beschleunigungskomponenten aufgeschaltet sind,

(c) auf den Schätzer weiterhin die Differenzen ($\underline{z}_2$) der von Tochter- und Mutternavigationssystem (32 bzw. 30) in den zugehörigen Koordinatensystemen gemessenen Drehgeschwindigkeitskomponenten aufgeschaltet sind, und

(d) der Schätzer

($d_1$) erste Matrixmittel (86) enthält, welche einen Schätzwert ($\underline{\hat{x}}_1$) für die Winkelfehler ($\varphi$, $\vartheta$, $\psi$) zwischen Mutter- und Tochternavigationssystem (30 bzw. 32) mit einer Matrix ($H_1$) multiplizieren, deren Elemente von im Mutternavigationssystem (30) gemessenen Beschleunigungskomponenten gebildet sind, derart, daß ein Vektor gebildet wird, welcher einen dem Schätzwert ($\underline{\hat{x}}_1$) der Winkelfehler zugeordneten Schätzwert für die Differenzen der Beschleunigungskomponenten darstellt,

($d_2$) Mittel (84) zur Bildung der Differenz des von den Differenzen der Beschleunigungskomponenten gebildeten Vektors ($\underline{z}_2$) und des von den Schätzwerten dieser Differenzen der Beschleunigungskomponenten gebildeten Vektors als ersten Differenzvektor,

($d_3$) zweite Matrixmittel (108) zur Multiplikation eines Schätzwertes ($\hat{\underline{x}}_1$) der Winkelfehler ($\varphi$, $\vartheta$, $\phi$) mit einer Matrix ($H_2$), deren Elemente von im Mutternavigationssystem (30) gemessenen Winkelgeschwindigkeitskomponenten gebildet sind, derart, daß ein Vektor gebildet wird, welcher einen dem Schätzwert ($\underline{\hat{x}}_1$) der Winkelfehler zugeordneten Schätzwert für die Differenzen der Winkelgeschwindigkeitskomponenten darstellt,

($d_4$) dritte Matrixmittel (110) welche einen Schätzwert ($\hat{\underline{x}}_2$) der Nullpunktfehler der Winkelgeschwindigkeitssensoren des Tochternavigationssystems mit der Einheitsmatrix (I) multiplizieren,

($d_5$) vierte Matrixmittel (112) welche einen Schätzwert ($\hat{\underline{x}}_2$) der Skalenfaktorfehler der Winkelgeschwindigkeitssensoren des Tochternavigationssystems mit einer Matrix multiplizieren, welche nur in ihrer Diagonale von null verschiedene Elemente aufweist, welche den im Tochternavigationssystem gemessenen Winkelgeschwindigkeitskomponenten entsprechen,

($d_6$) Mittel (100) zur Bildung der Differenz des von den Differenzen der Winkelgeschwindigkeitskomponenten gebildeten Vektors ($\underline{z}_2$) einerseits und der von den zweiten, dritten und vierten Matrixmitteln gebildeten Vektoren andererseits als zweiten Differenzvektor und

($d_7$) erste, zweite und dritte Integrationsmittel (120,122,124) welche die besagten Schätzwerte ($\underline{\hat{x}}_1$, $\underline{\hat{x}}_2$, $\underline{\hat{x}}_3$) der Winkelfehler, der Nullpunktfehler und der Skalenfaktorfehler liefern und auf die jeweils der erste und der zweite Differenzvektor über zugeordnete Matrixmittel (88,114; 92,116,96,118) aufgeschaltet sind.

$\underline{\phi}(0)$

$\underline{a}_S^S$, Messwert

Integration

12

$\underline{\omega}_{IS}^S - \underline{\omega}_{IM}^M$

22

$\hat{\underline{\phi}}(t)$

Integration

$\dot{\underline{\phi}}(t)$

Transformation

14

$\hat{\underline{a}}_S^M$

16

$\underline{a}_M^M$

18

Messwert

10

20

Optimaler Schätzer und Regler

24

Sensorfehlerursachen

Fig.1

1/7

0179197

Fig. 3

Fig. 2

0179197

Fig. 4

0179197

Fig. 5

Fig. 6

0179197

*Fig.7*

0179197

Fig. 8